# EUROPEAN PATENT APPLICATION

(11) **EP 4 357 265 A1**
(43) Date of publication of application: **24.04.2024**
(21) Application number: 22825241.7
(22) Date of filing: 13.06.2022
(51) Int. Cl.: B65D 27/00, B65D 27/02, B65D 81/03

(54) **PACKAGING ENVELOPE INSERTION-TYPE PAPER BUFFER SAFETY MEMBER**

(30) Priority: 17.06.2021 KR 20210078577
(71) Applicant: K & L Pack Co., Ltd., Osan-si, Gyeonggi-do 18150 (KR)
(72) Inventor: KIM, Beom Jin, Daegu 42073 (KR)
(74) Representative: Meissner Bolte Partnerschaft mbB
(86) International application number: PCT/KR2022/008271
(87) International publication number: WO 2022/265316

(57) **Abstract**

The present invention relates to a packaging envelope insertion-type paper buffer safety member which can be inserted into a packaging envelope in order to cushion impacts. The paper buffer safety member comprises: a base member made of rectangular paper having a certain thickness; and a paper buffer material attached to the rear surface of the base member. A plurality of width direction fold lines are formed on the front surface of the base member so as to be spaced a certain distance from each other. On the front surface of the base member, a first adhesive layer is formed over the entire lower end in the longitudinal direction, and a second adhesive layer is formed over the entire upper end other than a portion of the front side. The paper buffer safety member is formed by folding the base member along the width direction fold line at the front side and then sequentially folding the entire folded region along the next fold lines in a state in which the paper buffer material is attached to the rear surface of the base member. According to the above configuration, a packaging envelope insertion-type paper buffer safety member, which is easy to manufacture and can obtain a sufficient cushioning effect to effectively protect an article, and a method for manufacturing the safety member may be provided.

## Description

### Cross-Reference to Related Applications

This application is a continuation application of International Application No. PCT/KR2022/008271 filed on June 13, 2022, which claims priority to Korean Patent Application No. 10-2021-0078577 filed on June 17, 2021, the entire contents of which are herein incorporated by reference.

### Technical field

The present invention relates to a packaging envelope insertion-type paper buffer safety member which can be inserted into a packaging envelope in order to cushion impacts.

### Background art

In general, when an article is delivered by parcel delivery service, the article is delivered being put in a delivery box or in a resin envelope.

Envelopes are mainly used to hold thin articles, and in order to effectively protect the articles inside from impact during the delivery process, envelopes with improved buffering performance have been developed and used by attaching air caps, commonly known as bubble wrap, to the inside of the envelope.

However, the use of plastic bags is gradually decreasing due to social criticism that plastic materials cause environmental pollution, and paper envelopes with a paper buffer material made of paper, an eco-friendly material, are being recommended as an alternative.

The conventional paper envelope with a paper buffer material is used by attaching a paper buffer material to one or both sides of a base member made of paper. The paper buffer material is formed by forming a certain arrangement of cuts on a thin paper, and then pulling the two sides of the paper to spread the cuts, forming a part that protrudes inclined to a certain height and a groove therebetween to have a buffering effect.

However, if adjacent paper buffer materials are engaged with each other and the protruding parts fit one another during the assembly process of the paper envelope, the buffering effect is not sufficient for the materials used, and the manufacturing process is complicated to manufacture such a structure, resulting in material waste and increased costs.

### Prior art reference

### Patent document

(Patent document 0001) Korean Patent Laid-Open No. 10-2007-0022462

### Summary of invention

### Technical task

The present invention was invented in view of the above, and aims to provide a packaging envelope insertion-type paper buffer safety member capable of effectively protecting an article by enabling sufficient buffering effect to be obtained while being simple to manufacture, and a method for manufacturing the safety member.

### Means for solving technical task

In order to achieve the above object, the packaging envelope insertion-type paper buffer safety member according to the present invention comprises: a base member made of rectangular paper having a certain thickness; and a paper buffer material attached to the rear surface of the base member, wherein a plurality of width direction fold lines are formed on the front surface of the base member to be spaced a certain distance from each other, a first adhesive layer is formed over the entire lower end and a second adhesive layer is formed over the entire upper end other than a portion of the front side, on the front surface of the base member in the longitudinal direction, and the base member is folded along the width direction fold line from the front side and then the entire folded region is sequentially folded along the next fold lines in a state in which the paper buffer material is attached to the rear surface of the base member, to form the packaging envelope insertion-type paper buffer safety member.

In addition, the base member is divided into first to fourth portions based on the fold lines, and in a state in which the first to fourth portions are sequentially folded, the first to fourth portions are all bonded with an adhesive at the lower end of the base member, and the first and second portions are not formed with an adhesive layer at the upper end of the base member so that an open inlet is formed and the other portions are bonded.

The packaging envelope according to another embodiment of the present invention comprises the packaging envelope insertion-type paper buffer safety member.

The method for manufacturing a packaging envelope insertion-type paper buffer safety member according to another embodiment of the present invention, comprises: preparing a base member made of rectangular paper having a certain thickness; bonding a paper buffer material to the rear surface of the base member; forming a first adhesive layer over the entire lower end on the front surface of the base member in the longitudinal direction; forming a second adhesive layer over the entire upper end other than a portion of the front side on the front surface of the base member in the longitudinal direction; forming a plurality of width direction fold lines on the front surface of the base member to be spaced a certain distance from each other so that the base member is divided into first to fourth portions based on the fold lines; and folding the base member along the first fold line from the front side of the base member and then sequentially folding the entire folded region along the next fold lines, wherein by the folding, the first to fourth portions are all bonded with the first adhesive layer at the lower end of the base member, and the first and second portions are not formed with the second adhesive layer at the upper end of the base member so that an open inlet is formed and the other portions are bonded with the second adhesive layer.

In addition, the method further comprises: between the steps of attaching the paper buffer material and forming the first adhesive layer, winding the base member along a cylindrical spool member and removing the cylindrical spool member; and pressing the base member in a convex shape.

### Effect of invention

According to the present invention, a packaging envelope insertion-type paper buffer safety member, which is easy to manufacture and can obtain a sufficient cushioning effect to effectively protect an article, and a method for manufacturing the safety member may be provided.

### Brief description of drawings

Fig. 1 is a drawing illustrating a packaging envelope according to an embodiment of the present invention;
Fig. 2 is a drawing illustrating a state in which an inner envelope is detached from the packaging envelope of Fig. 1;
Fig. 3 is a drawing illustrating a base member and a paper buffer material of the inner envelope of Fig. 2 before folding;
Figs. 4a to 4d are drawings sequentially illustrating a method for manufacturing the inner envelope of Fig. 2;
Fig. 5a is a cross-sectional view taken along line A-A' in Fig. 4d; and
Fig. 5b is a cross-sectional view taken along line B-B' in Fig. 4d.

### Best mode for carrying out the invention

Hereinafter, the constitution and effect of preferred embodiments of the present invention will be described in detail with reference to the accompanying drawings. It should be noted that in appending reference numerals to the components in each drawing, like numerals are used to refer to like elements as much as possible, even if they are shown in different drawings.

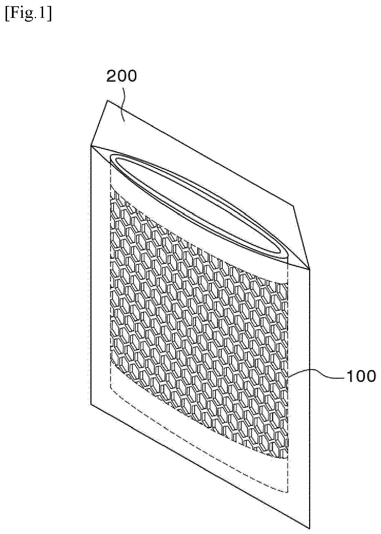

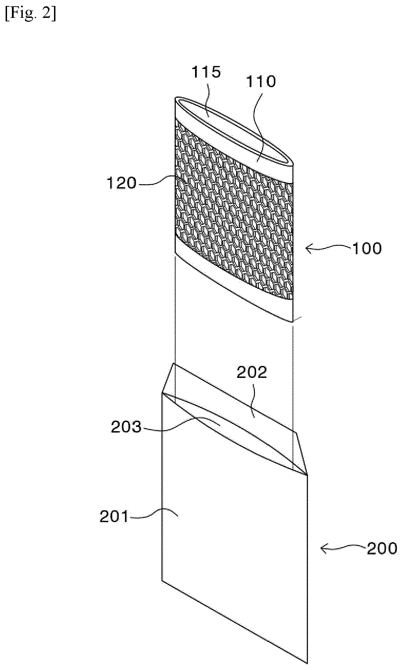

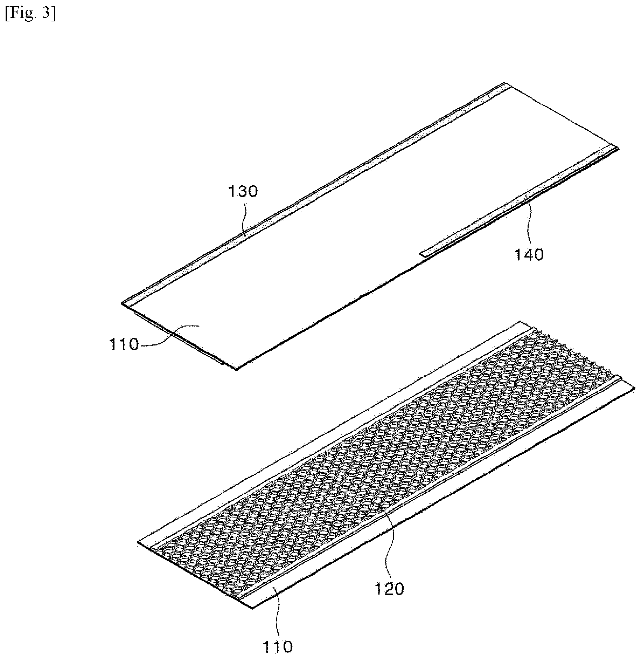

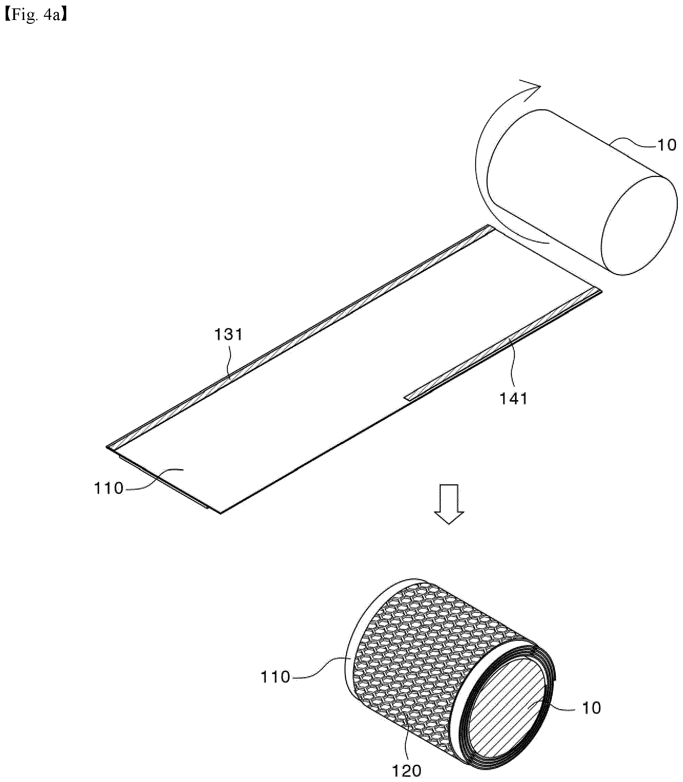

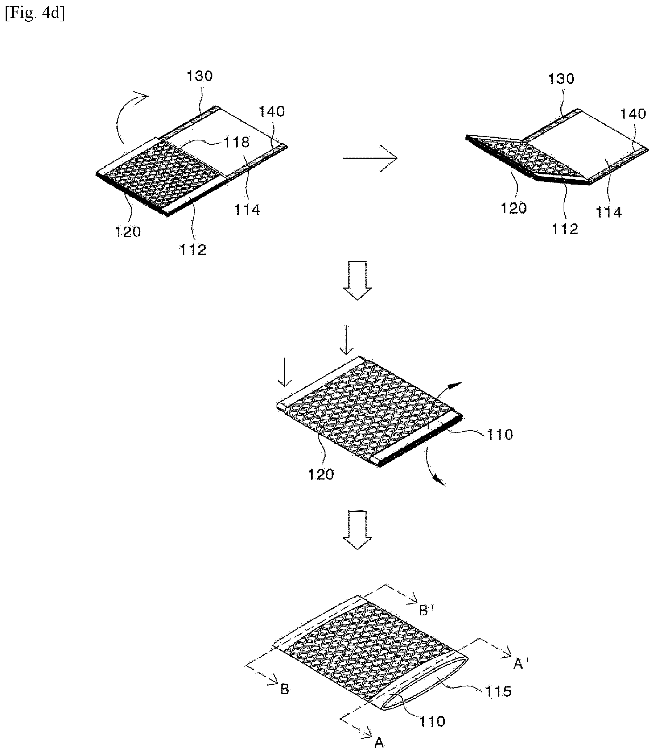

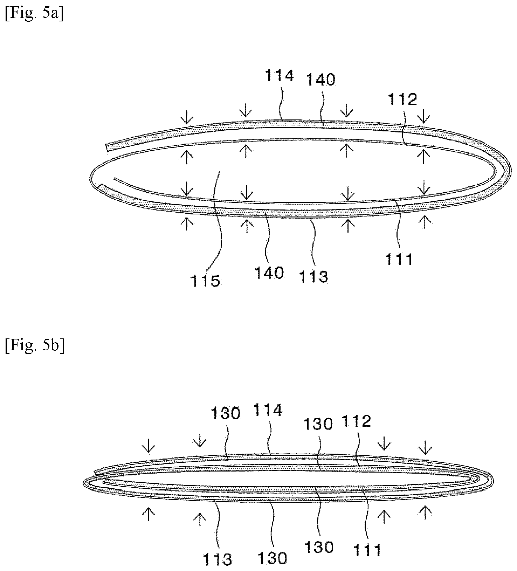

Fig. 1 is a drawing illustrating a packaging envelope according to an embodiment of the present invention. Fig. 2 is a drawing illustrating a state in which an inner envelope is detached from the packaging envelope of Fig. 1. Fig. 3 is a drawing illustrating a base member and a paper buffer material of the inner envelope of Fig. 2 before folding. Figs. 4a to 4d are drawings sequentially illustrating a method for manufacturing the inner envelope of Fig. 2. Fig. 5a is a cross-sectional view taken along line A-A' in Fig. 4d. Fig. 5b is a cross-sectional view taken along line B-B' in Fig. 4d.

Referring to Fig. 1, the double envelope of the present invention is formed by inserting an inner envelope 100 (or paper buffer safety member) into an outer envelope 200 (or packaging envelope).

The inner envelope 100 is inserted into the outer envelope 200 to provide a buffer and protect an article contained in the inner envelope 100.

Referring to Fig. 2, the outer envelope 200 has an inlet 203 formed on the upper side of an accommodation part 201, and a closing piece 202 connected to the accommodation part 201 for closing the inlet 203.

The inner envelope 100 comprises a base member 110 and a paper buffer material 120.

The base member 110 is made of rectangular paper having a certain thickness, and has an inlet 115 formed on the upper side.

The paper buffer material 120 is attached to the rear surface of the base member 110. The paper buffer material 120 may be formed in a honeycomb structure, such as a beehive, to provide a certain cushioning force. For example, the paper buffer material 120 may be formed by forming cuts in a certain arrangement structure on a thin paper, and then pulling the two sides of the paper to spread the cuts, forming a part that protrudes inclined to a certain height and a groove therebetween. The paper buffer material 120 may be implemented in various forms known in the art.

Referring to Fig. 3, the paper buffer material 120 is attached to the rear surface of the base member 110. On the front surface, a first adhesive layer 130 is formed over the entire lower end, and a second adhesive layer 140 is formed over the entire upper end other than a portion of the front side, in the longitudinal direction.

The paper buffer material 120 is not attached to the part of the rear surface of the base member 110, which corresponds to the part where the first adhesive layer 130 and the second adhesive layer 140 are formed. This is to ensure that smooth adhesion is achieved through the first adhesive layer 130 and the second adhesive layer 140 in the process of folding the base member 110 to form the inner envelope 100.

The first adhesive layer 130 and the second adhesive layer 140 may be formed by applying an adhesive on the front surface of the base member 110, attaching a release paper on the adhesive, and removing the release paper. For example, the first adhesive layer 130 and the second adhesive layer 140 may be formed by removing a release paper from one side of a double-sided tape, attaching the double-sided tape to the front surface of the base member 110 and removing the other side of the release tape.

Hereinafter, a method for manufacturing an inner envelope 100 of the present invention will be described with reference to Figs. 4a to 4d.

Referring to Fig. 4a, in a state in which the release paper 131, 141 is attached to the first adhesive layer 130 and the second adhesive layer 140, the front surface of the base member 110 is brought into contact with the cylindrical spool member 10, and then the base member 110 is fully wound onto the cylindrical spool member 10.

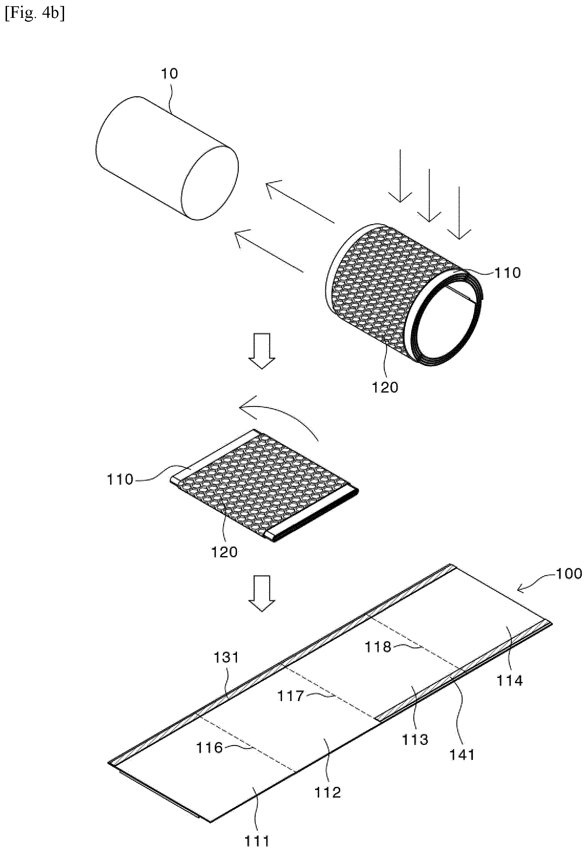

Next, referring to Fig. 4b, the cylindrical spool member 10 is removed from the wound base member 110, and the base member 110 in a convex shape is pressed, and then unfolded to its original state.

Next, a plurality of width direction fold lines 116, 117, 118 are formed in the base material 110 to be spaced a certain distance from each other, such that the base member 110 is divided into first to fourth portions 111, 112, 113, 114 based on the fold lines 116, 117, 118.

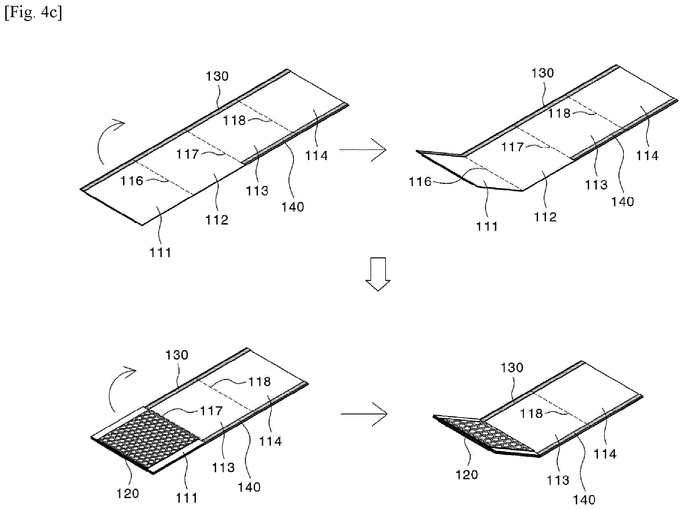

Next, referring to Figs. 4c and 4d, the release paper 131, 141 is removed to expose the first adhesive layer 130 and the second adhesive layer 140.

The first portion 111 of the base member 110 is folded along the frontmost fold line 116 so that the first portion 111 overlaps the second portion 112.

Next, the entire folded region is folded along the next fold line 117, and the entire folded region is folded along the next fold line 118, such that the base member 110 is sequentially folded along the fold lines 116, 117, 118.

In the process of folding the base member 110 divided into the first to fourth portions 111, 112, 113, 114 along the fold lines 116, 117, 118, the lower end and upper end of the base member 110 are pressed to be bonded by the first adhesive layer 130 and the second adhesive layer 140.

Referring to Fig. 5b, in the process of folding the base member 110 along the fold lines 116, 117, 118, the first to fourth portions 111, 112, 113, 114 may be fully bonded at the lower end by the exposed first adhesive layer 130.

A second adhesive layer 140 is formed over the entire upper end of the base member 110 other than a portion of the front side. Referring to Fig. 5a, in the process of folding the base member 110 along the fold lines 116, 117, 118, the first portion 111 and the second portion 112 at the front of the base member 110 are not formed with the second adhesive layer 140 so that they are simply folded with an open inlet 115 formed, and the third portion 113 and the fourth portion 114 may be bonded by the second adhesive layer 140.

According to a method for manufacturing an inner envelope 100 of the present invention and the inner envelope 110 manufactured by the method, an inner envelope 100 having a lower end fully bonded and an upper end with an inlet 115 may be manufactured in a simple way by forming a first adhesive layer 130 and a second adhesive layer 140 at the lower end and upper end of the base member 110 and simply folding them along the fold lines 116, 117, 118.

In addition, a paper buffer material 120 is attached to the rear surface of the base member 110 to have a sufficient cushioning effect by the paper buffer material 120 arranged in each layer in the process of folding the base member 110 into multiple layers along the fold lines 116, 117, 118, and the cushioning effect may be doubled by increasing the number of folds.

The reason why the second adhesive layer 140 is not formed on a portion of the front side at the upper end of the base member 110 is to form an open inlet 115 at the upper end. The second adhesive layer 140 is formed on a portion other than the portion formed with the inlet 115, so that the remaining portion other than the portion formed with the inlet 115 may be bonded.

It is apparent to a person skilled in the art that the present invention is not limited to the above embodiments and may be practiced in various modifications or variations without departing from the technical gist of the present invention.

### Description of reference numerals

10: cylindrical spool member
100: inner envelope
110: base member
111: first portion
112: second portion
113: third portion
114: fourth portion
115: inlet
116, 117, 118: fold line
130: first adhesive layer
131: release paper
140: second adhesive layer
141: release paper
200: outer envelope
201: accommodation part
202: closing piece
203: inlet

## Claims

1. A packaging envelope insertion-type paper buffer safety member, comprising:
a base member made of rectangular paper having a certain thickness; and
a paper buffer material attached to the rear surface of the base member,
wherein a plurality of width direction fold lines are formed on the front surface of the base member to be spaced a certain distance from each other, a first adhesive layer is formed over the entire lower end and a second adhesive layer is formed over the entire upper end other than a portion of the front side, on the front surface of the base member in the longitudinal direction, and the base member is folded along the width direction fold line from the front side and then the entire folded region is sequentially folded along the next fold lines in a state in which the paper buffer material is attached to the rear surface of the base member, to form the packaging envelope insertion-type paper buffer safety member.

2. The packaging envelope insertion-type paper buffer safety member of claim 1, wherein the base member is divided into first to fourth portions based on the fold lines, and in a state in which the first to fourth portions are sequentially folded, the first to fourth portions are all bonded with an adhesive at the lower end of the base member, and the first and second portions are not formed with an adhesive layer at the upper end of the base member so that an open inlet is formed and the other portions are bonded.

3. A packaging envelope comprising the packaging envelope insertion-type paper buffer safety member of any one of claims 1 and 2.

4. A method for manufacturing a packaging envelope insertion-type paper buffer safety member, comprising:
preparing a base member made of rectangular paper having a certain thickness;
bonding a paper buffer material to the rear surface of the base member;
forming a first adhesive layer over the entire lower end on the front surface of the base member in the longitudinal direction;
forming a second adhesive layer over the entire upper end other than a portion of the front side on the front surface of the base member in the longitudinal direction;
forming a plurality of width direction fold lines on the front surface of the base member to be spaced a certain distance from each other so that the base member is divided into first to fourth portions based on the fold lines; and
folding the base member along the first fold line from the front side of the base member and then sequentially folding the entire folded region along the next fold lines,
wherein by the folding, the first to fourth portions are all bonded with the first adhesive layer at the lower end of the base member, and the first and second portions are not formed with the second adhesive layer at the upper end of the base member so that an open inlet is formed and the other portions are bonded with the second adhesive layer.

5. The method of claim 4, further comprising:
between the steps of attaching the paper buffer material and forming the first adhesive layer,
winding the base member along a cylindrical spool member and removing the cylindrical spool member; and
pressing the base member in a convex shape.
